# EUROPEAN PATENT APPLICATION

(11) **EP 1 836 900 A1**
(43) Date of publication of application: **26.09.2007**
(21) Application number: 07386007.4
(22) Date of filing: 14.03.2007
(51) Int. Cl.: A23G 3/00

(54) **Sweets based on halvah with chocolate coating**

(30) Priority: 20.03.2006 GR 20060100172
(71) Applicant: Dimitrios, Alexopoulos, 40300 Farsala Larisis (GR)
(72) Inventor: Dimitrios, Alexopoulos, 40300 Farsala Larisis (GR)

(57) **Abstract**

Confectionery based on halva (1) consisting of water, sugar, citric acid, comflour, (with or without almonds), sheep or goat butter, or vegetable oils with cinnamon for fasting or butter with vegetable oils. It is characterized by the fact that the halva is cut into small pieces which are covered with a layer (3) of white or dark cooking
Chocolate, or milk chocolate.

## Description

### The technical field to which the invention refers.

The invention refers to confectionery based on Farsalon halva which is topped
with dried nuts, glace fruit in syrup, traditional.
products, sesame, desiccated coconut, jams, confectionery creams. This is all covered with milk cooking chocolate, diabetic chocolate mixed with milk chocolate, diabetic, white and dark chocolate.
Level of previous technique and assessment of it.

### Advantages of the invention

Farsalon halva is well known up until today. It is sold loose at room temperature in cake boxes in confectioners, in supermarkets and trade in large 12kgs baking pans.

The advantages of our invention is that Farsalon halva can be cut into small pieces which are covered with dried nuts, glace fruit in syrup, traditional products, sesame, desiccated coconut, jams and confectioner's cream. All this is covered in chocolate and kept unchanged in the fridge.
The preparation method of the confectionery is as follows: Halva is made with following ingredients: boiled water, sugar, citric acid, comflour, (with or without almonds) and the cooking process begins, adding sheep or goat butter, or vegetable oils, with cinnamon for fasting or butter. With vegetable oils. Once the halva is cooked it is cut into small pieces which are the basis of the confectionery.

It is topped with dried nuts, glace fruit in syrup, sesame, desiccated coconut, jams, confectionery creams. The product is then covered in dark or white chocolate and the confectionery is made into chocolate-size pieces or individual dessert-size pieces, like the individual cakes server separately or by the kilo
**1. HALVAS**
**2. CONFECTIONERY CREAMS-TRADITIONAL PRODUCTS-DRIED NUTS-FRUIT**
**3. CHOCOLATE**

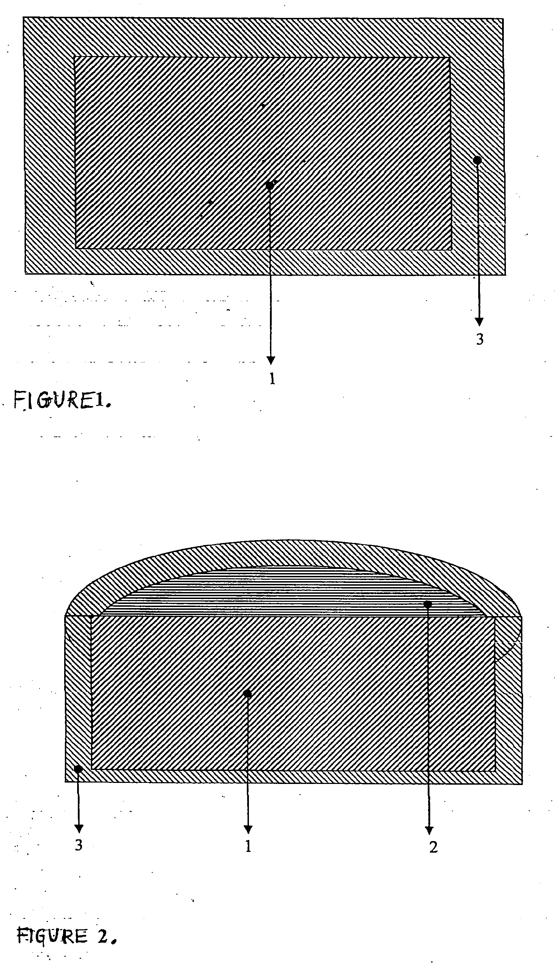

## Claims

1. Confectionery based on halva consisting of water, sugar, citric, acid, corn-flour, (with or without almonds.), sheep or goat butter, or vegetable oils with cinnamon for fasting or butter with vegetable oils. It is **characterized by** the fact that the halva is cut into small pieces which are covered with a layer of white or dark cooking chocolate, or milk chocolate.

2. Confectionery based on halva as in claim 1 in which pieces of dried nuts such as almonds, hazel nuts, pistachio nuts etc. are placed between the pieces of halva and the covering layer of chocolate.

3. Confectionery based on halva as in claim 1 in which glace fruit in syrup such as plum, orange, fig etc. are placed between the pieces of halva and the covering layer of chocolate.

4. Confectionery based on halva as in claim 1 in which pieces of traditional products such as mastic from Chios, vanillia, Turkish delight, sesame bar, nougat etc. are placed between the pieces of halva and the covering layer of chocolate.

5. Confectionery based on halva as in claim 1 in which different confectionery creams is placed between the pieces of halva and the covering layer of chocolate.

6. The production method of the confectionery in Claim 1 involves the following stages: The water is boiled with sugar, citric acid, corn-flour,(with or without almonds) and the cooking process begins, adding sheep or goat butter, or vegetable oils with cinnamon for fasting or butter with vegetable oils .Once the halva is cooked it is left to cool for a day, then cut it into small pieces which is the base of the confectionery. It is topped with dried nuts, glace fruit in syrup, sesame, desiccated coconut, jams, confectionery creams. The product is then covered in dark or white chocolate and the confectionery is made in chocolate-size pieces or individual dessert-size pieces, like the individual cakes served separately or by the kilo.
